# EUROPEAN PATENT SPECIFICATION

(11) **EP 0 986 601 B1**
(45) Date of publication and mention of the grant of the patent: **07.08.2002**
(21) Application number: 98921645.2
(22) Date of filing: 15.05.1998
(51) Int. Cl.: C08J 9/00, C08K 3/24, C08K 3/26, C08K 5/09, C08L 61/04

(54) **COMPOSITION FOR THE MANUFACTURE OF A FOAM MATERIAL BASED ON PHENOLIC RESIN**
ZUSAMMENSETZUNG ZUR HERSTELLUNG EINES SCHAUMWERKSTOFFS BASIEREND AUF EINEM PHENOLHARZ
COMPOSITION PERMETTANT LA FABRICATION D'UN MATERIAU ALVEOLAIRE A BASE DE RESINE PHENOLIQUE

(30) Priority: 27.05.1997 DE 19722182
(43) Date of publication of application: 22.03.2000
(73) Proprietor: Fosroc International Limited, Swindon, Wiltshire SN3 1RE (GB)
(72) Inventor: BODE, Harald, D-44287 Dortmund (DE); KRIZANOVIC, Olga, D-58313 Herdecke (DE)
(74) Representative: Hymers, Ronald Robson
(86) International application number: GB9801431
(87) International publication number: WO9854243

(56) References cited:
- EP-A- 0 629 655
- DATABASE WPI Section Ch, Week 9539 Derwent Publications Ltd., London, GB; Class A14, AN 95-299361 XP002075800 & JP 07 196 318 A (MARUO CALCIUM KK)
- DATABASE WPI Section Ch, Week 9538 Derwent Publications Ltd., London, GB; Class A21, AN 95-290509 XP002075801 & JP 07 188 446 A (SHOWA HIGH POLYMER CO LTD)

## Description

The invention concerns a composition for the manufacture of homogenous foamed fire resistant phenolic resin materials The invention also concerns homogenous foamed resin materials and a method for their manufacture In addition the invention concerns the application in mining of the foamed resin materials named in the foregoing and their components

It is known to use various blowing agents for the manufacture of fire resistant foamed materials based on phenolic resin In the past one used principally the reaction between the carbonates and/or bicarbonates of alkali metals and acids Halogenated hydrocarbons (Ru, R141b: R134a) and alkanes (butane, pentane; hexane) have also been used. In order to protect the environment, halgenated hydrocarbons, which in the past have been used as the ideal chemical blowing agent, are now only permissible for special applications Alkanes are inflammable and are therefore ill suited for applications in underground mining

Japanese Patent Application No. 07196318A discloses a problem encountered using calcium carbonate. The problem is that the calcium carbonate reacts and foams immediately on mixing and it is necessary to have some control over the reaction to delay foaming until some time after the mixing of the components. This reference proposed modifying the surface of the calcium carbonate with barium sulphate or a polymer e.g. a polymer of acrylic of maleic acid. This gives some control over the time between mixing and foaming.

From FR-A-2,686,123 a mixture for the manufacture of a phenolic resin is known which, apart from sulphonic acid as the acid component, employs sodium bicarbonate as the component for the production of carbon dioxide (blowing agent)

However, alkali metal carbonates and bicarbonates, which have already been employed previously, exhibit disadvantages in use, especially with regard to underground applications If one considers these classical carbonates, such as sodium carbonate and bicarbonate then it can be ascertained that, at least in the lower regions of the prepared foam, their use leads to an heterogeneous foam structure. Caverns the size of a fist and shrinkage are formed in the case of larger quantities of foam In addition, at the level of foam factors which it is desired to obtain, these carbonates easily form a sediment in the starting composition because the solubility of the carbonate in the resin is exceeded.

After the components have stood for an extended period the sediment, which can only be suspended again with difficulty, contains lumps which lead to problems during mechanical processing. This condition can be traced back amongst other reasons to the carbonate's tendency to crystallise. The addition of a thixotroping agent which is intended to prevent sedimentation leads to a time delay.

It is especially for mining applications that one wants a product which provides the desired foaming factor, possesses a low viscosity, exhibits a long shelf life, which is dissolved or dispersed and which does not settle out.

The application of a fully soluble carbonate such as potassium carbonate would be conceivable. In fact such a measure does lead to an homogeneous foam and, in the case of immediate processing, no disadvantages are caused by sedimentation of the carbonate. In this case it has been shown however that even after only one week a significant increase in the viscosity is to be noted. After two weeks processing with the usual equipment is virtually no longer possible.

In this case the only possibility is to create a three component system. However this would mean having to forego the use of available machines because one would wish to work on site with a two component system.

If one considers at the same time therefore the shelf life, the ability to be processed, viscosity, sedimentation behaviour and/or solubility and foam structure, then known carbonate driven 2 component phenolic resin foam systems do not offer any satisfactory solution.

The task of the present invention therefore is the preparation of a product which delivers the desired foaming factor, possesses a low viscosity, exhibits a long shelf life, remains dissolved or dispersed and which does not settle out.

Surprisingly it has been found that materials containing difficult to dissolve carbonate containing basic carbonates in a finely divided form, preferably precipitated, lead to an excellent foam result if they are used in a mixture for the manufacture of a phenolic resin.

The problem described above is solved by the subject matter according to claim 1. Further preferred embodiments are cited in the subsidiary claims.

These basic carbonate containing materials preferably exhibit a bulk density in the range of 1-50 wt.% of their intrinsic material density. Preferred is a value in the range of 3-30 wt.% of the intrinsic material density, in particular 9-22 wt.% but also 1-20 wt.% or 2-11 wt.%.

The intrinsic material density of these materials in general lies within the range of 1.7 to 8 g/cm³.

The particle size of the basic carbonate containing materials preferably lies in the range 0.05-500 µm. Preferred ranges are 0.05-10 µm, but also 1-100 µm.

Preferably the basic carbonate containing materials exhibit a large surface area. In general this depends on the fineness of the envisaged carbonate containing material. For example, depending on origin and manufacturing methods, the ranges are 0.5-30 m²/g or 10-100 m²/g but also 0.1-10 m²/g.

A low bulk density can preferably be achieved by a precipitation process in a manner which is itself known. The precipitation process may if necessary be facilitated by the addition of organic solvents. But grinding and other comminution processes are however also suitable. Reference is made in particular to naturally occurring basic carbonate containing materials which according to their structure already occur in powder form or which can be converted into powder without any great expenditure. An example is chalk.

The basic carbonate containing materials preferably are difficult to dissolve. Their solubility at 25°C is preferably pK_{L}> 2.9, in particular pK_{L} 3 to 20, preferred pK_{L} 4 to 11.

The basic carbonate containing materials used in the present invention comprise at least one element having a valency greater than one. This element is selected from elements in the main groups II.-V. of the Periodic System of Elements, the transitional group of elements and from lanthanides. Preferred are elements of main group II. in particular magnesium and/or calcium.

The basic carbonate containing materials used in the present invention may be of natural or of synthetic origin.

Examples for carbonates that may be present in the basic carbonate containing materials are CaCO₃, MgCO₃, SrCO₃, BaCO₃, CuCO₃, CoCO₃, FeCO₃, ZnCO₃, La₂(CO₃)₃ OR NiCO₃. Natural carbonates are calcite, marble, tufaceous limestone sea chalk, writing chalk, chalk calcite (Ca containing) jurassic, tertiary, shell, Zechstein, Devonian or triascalc dolomite, dolomitic limestone (containing Ca and Mg), strontiumnite, (containing Sr) or witherite (containing Ba).

Examples of hydroxide carbonates (basic carbonates) are basic magnesium carbonates e.g. MgCO₃ Mg(OH)₂ 3 H₂O 3 MgCO₃ Mg(OH)₂ 3 H₂O and mixed forms thereof, CuCO₃ Cu(OH)₂, 2 NiCO₃ 3 Ni(OH)₂ 4 H₂O 4 NiCO₃ 2 Ni(OH)₂ 4 H₂O and mixed forms thereof, basic aluminium carbonate, basic bismuth carbonate (Bi₂O₂CO₃) or basic zirconium carbonate. The basic magnesium carbonates are preferred.

Basic carbonate containing materials can also be used which represent an homogeneous mixture of the above named materials and/or which in addition contain a carbonate of a univalent element.

Furthermore, as long as the effect as a blowing agent is not impaired, basic carbonate mixtures consisting of carbonates and/or hydroxide carbonates and/or hydroxides can also be used.

Through the use of hydroxide carbonates and/or mixtures of carbonates with hydroxides an advantageous buffer effect is achieved for the formation of the foamed resin.

The compositions named above can be employed with the usual resole resins. They are applied to substrates, which are common in mining, rock or coal. Passageways are preferably closed e.g. ventilation dams are produced.

By the use of the composition according to the invention for the manufacture of foamed phenolic resin materials the following additional advantages can be achieved in comparison with the usual compositions.
1. Because of the low bulk density the carbonate containing material will be held in suspension for a long time. If it should settle out after a prolonged period then it can easily be re-dispersed because it can not dissolve and form lumps.
2. Also the low bulk density is responsible for a fine uniform distribution which leads to a uniform foam structure.
3. The presence of an hydroxide carbonate and/or a mixture of carbonate and hydroxide, buffers the acid so that the spontaneous gas evolving reaction proceeds in a controlled manner and likewise supports a uniform foam structure.
4. Because of its lack of solubility, the carbonate containing material has no injurious effect on the phenolic resin so that only the natural viscosity increase is present which thus gives a shelf life of optimum stability.
5. Because of the heat of neutralisation/condensation the foam permits a good foam result, even at low ambient temperatures.

The following example explains the invention.

### Example

A pre-mix having the following composition is prepared:

| | |
|---|---|
| Resole resin | 72.0 parts by weight |
| Water | 10.5 parts by weight |
| Flame retarding agent (50% aqueous potassium tri- polyphosphate) | 11.2 parts by weight |
| Magnesium hydroxide carbonate (with a bulk density of 75 g/l) | 72.0 parts by weight |

Resin component A is obtained.

Resin component A is mixed with acid component B. The mixing ratio of components A:B is 100:25. Acid component B consists of the following constituents:

| | |
|---|---|
| Phenol sulphonic acid | 44.0 parts by weight |
| Sulphuric acid | 24.0 parts by weight |
| Water | 32.0 parts by weight |

The mixture which is obtained is processed by means of a two component machine in the mixing ratio reported above. A pre-foamed mixture comes out of the mixer and hardens within about 2 to 3 minutes. The foam is very homogenous and has a raw density of about 45 kg./m³. The stated components have a shelf life of several months.

## Claims

1. A composition for the manufacture of a foam material based on phenolic resin, comprising components for the manufacture of a phenolic resin, an acid material and a carbonate-containing material, **characterised in that** the carbonate-containing material comprises a basic carbonate of an element selected from the main Groups II to V of the Periodic System of elements, the transition group of elements and the lanthanides.

2. A composition according to claim 1 in which the composition is present as a two component mixture.

3. A composition as claimed in any one of the preceding claims wherein the element selected from the main Group II of the Periodic System of elements is magnesium and/or calcium.

4. A composition for the manufacture of a foam material according to any one of the preceding claims in which the basic carbonate is a mixture of a carbonate and/or basic carbonate and/or hydroxide.

5. A composition for the manufacture of a foam material according to any one of the preceding claims in which the basic carbonate exhibits a bulk density in the range of 1 to 50wt % of the intrinsic material density of the basic carbonate.

6. A composition for the manufacture of a foam material according to any one of the preceding claims in which the basic carbonate is a basic magnesium carbonate.

7. A composition according to claim 6 wherein the basic magnesium carbonate exhibits a bulk density within the range of 60 to 600 g/l.

8. A method for the manufacture of a foam material based on phenolic resin which comprises mixing the components according to any one of the preceding claims, applying the mixture onto a substrate and allowing it to harden.

9. Foam material obtainable according to the method of claim 8.

10. The use of a composition as claimed in any one of claims 1 to 7 for the coating of substrates, coal and rock which are common in mining.

## Patentansprüche

1. Zusammensetzung zur Herstellung eines Schaummaterials auf Phenolharzbasis, enthaltend Komponenten zur Herstellung eines Phenolharzes, einen sauren Stoff und einen carbonathaltigen Stoff, **dadurch gekennzeichnet, daß** der carbonathaltige Stoff ein basisches Carbonat eines Elements enthält, das aus den Hauptgruppen II bis V des Periodensystems der Elemente, der Gruppe der Übergangselemente und den Lanthaniden ausgewählt ist.

2. Zusammensetzung nach Anspruch 1, worin sie als ein Zweikomponentengemisch vorliegt.

3. Zusammensetzung nach einem der vorstehenden Ansprüche, worin das aus der Hauptgruppe II des Periodensystems der Elemente ausgewählte Element Magnesium und/oder Calcium ist.

4. Zusammensetzung zur Herstellung eines Schaummaterials nach einem der vorstehenden Ansprüche, worin das basische Carbonat ein Gemisch aus einem Carbonat und/oder einem basischen Carbonat und/oder einem Hydroxid ist.

5. Zusammensetzung zur Herstellung eines Schaummaterials nach einem der vorstehenden Ansprüche, worin das basische Carbonat eine Schüttdichte im Bereich von 1 bis 50 Gew.% der spezifischen Materialdichte des basischen Carbonats aufweist.

6. Zusammensetzung zur Herstellung eines Schaummaterials nach einem der vorstehenden Ansprüche, worin das basische Carbonat ein basisches Magnesiumcarbonat ist.

7. Zusammensetzung nach Anspruch 6, worin das basische Magnesiumcarbonat eine Schüttdichte im Bereich von 60 bis 600 g/l aufweist.

8. Verfahren zum Herstellen eines Schaummaterials auf Phenolharzbasis, worin die Komponenten gemäß einem der vorstehenden Ansprüche gemischt werden, sowie das Gemisch auf ein Substrat aufgebracht und gehärtet wird.

9. Schaummaterial, erhältlich gemäß dem Verfahren nach Anspruch 8.

10. Verwendung einer Zusammensetzung nach einem der Ansprüche 1 bis 7 zum Beschichten von Substraten, Kohle und Felsen, die im Bergbau üblich sind.

## Revendications

1. Composition pour la fabrication d'un matériau alvéolaire à base de résine phénolique, comprenant des composants pour la fabrication d'une résine phénolique, un matériau acide et un matériau contenant du carbonate, **caractérisée en ce que** le matériau contenant du carbonate comprend un carbonate basique d'un élément sélectionné dans les Groupes II à V principaux du Tableau Périodique des éléments, le groupe de transition des éléments et les lanthanides.

2. Composition selon la revendication 1 dans laquelle la composition est présente comme un mélange à deux composants.

3. Composition selon l'une quelconque des revendications précédentes dans laquelle l'élément sélectionné dans le Groupe II principal du Tableau Périodique des éléments est le magnésium et/ou le calcium.

4. Composition pour la fabrication d'un matériau alvéolaire selon l'une quelconque des revendications précédentes dans laquelle le carbonate basique est un mélange d'un carbonate et/ou de carbonate basique et/ou d'hydroxyde.

5. Composition pour la fabrication d'un matériau alvéolaire selon l'une quelconque des revendications précédentes dans laquelle le carbonate basique présente une masse volumique apparente de 1 à 5% en poids de la masse volumique du matériau intrinsèque du carbonate basique.

6. Composition pour la fabrication d'un matériau alvéolaire selon l'une quelconque des revendications précédentes dans laquelle le carbonate basique est un carbonate de magnésium basique.

7. Composition selon la revendication 6 dans laquelle le carbonate de magnésium basique présente une masse volumique apparente de 60 à 600 g/l.

8. Procédé pour la fabrication d'un matériau alvéolaire à base de résine phénolique qui comprend le mélange des composants selon l'une quelconque des revendications précédentes, l'application du mélange sur un substrat et le fait de le laisser durcir.

9. Matériau alvéolaire pouvant être obtenu selon le procédé de la revendication 8.

10. Utilisation d'une composition selon l'une quelconque des revendications 1 à 7 pour le revêtement de substrats, charbon et pierre qui sont communs dans le domaine minier.
